Europäisches Patentamt

European Patent Office

Office européen des brevets

(19)

(11) Numéro de publication: **0 006 240**
**B1**

(12) **FASCICULE DE BREVET EUROPEEN**

(45) Date de publication du fascicule de brevet: **14.10.81**

(51) Int. Cl.³: **B 04 B 3/08, A 47 J 31/22**

(21) Numéro de dépôt: **79102011.8**

(22) Date de dépôt: **18.06.79**

(54) **Séparateur centrifuge continu.**

(30) Priorité: **19.06.78 FR 7818312**

(43) Date de publication de la demande:
**09.01.80 Bulletin 80/1**

(45) Mention de la délivrance du brevet:
**14.10.81 Bulletin 81/41**

(84) Etats Contractants Désignés:
**BE CH DE GB IT LU NL**

(56) Documents cités:
**DE - C - 691 923**

(73) Titulaire: **Cailliot, Serge**
**38, Rue du Bois de Boulogne**
**F-92200 Neuilly-sur-Seine (FR)**

(73) Titulaire: **SOCIETE NORMANDE DE SERVICES**
**59, Rue Colbert**
**F-92700 Colombes (FR)**

(73) Titulaire: **ANVAR Agence Nationale de**
**Valorisation de la Recherche**
**13, rue Madeleine Michelis**
**F-92522 Neuilly-sur-Seine (FR)**

(73) Titulaire: **SOCIETE GENERALE POUR LE**
**FINANCEMENT DE L'INNOVATION SOGINNOVE**
**50, Boulevard Haussmann**
**F-75009 Paris (FR)**

(73) Titulaire: **Cor, Bertrand**
**145, Rue de la Pompe**
**F-75116 Paris (FR)**

(73) Titulaire: **Gastinne, Arnaud**
**12, Rue Leo Delibes**
**F-75116 Paris (FR)**

(72) Inventeur: **Cailliot, Serge**
**38, Rue du Bois de Boulogne**
**F-92200 Neuilly-sur-Seine (FR)**

(74) Mandataire: **Casalonga, Alain et al,**
**Bureau D.A. Casalonga Lilienstrasse 77**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Séparateur centrifuge continu

L'invention concerne les séparateurs à paroi cylindrique tournante à renouvellement continu du type comportant un enroulement hélicoïdal à spires jointives d'une lanière sans fin bouclée sur elle-même pour se dérouler lentement à une extrémité et se réenrouler à l'autre extrémité en progressant axialement en même temps qu'elle est entraînée en rotation continue à plus grande vitesse.

On connaît déjà, d'après le brevet allemand 691.923, des centrifugeuses de ce type dans lesquelles la lanière sans fin est une bande plate perforée, l'enroulement hélicoïdal étant disposé à l'intérieur d'une cage rotative dont les barreaux tournent fous sur eux-mêmes, l'entraînement de renouvellement de la bande étant assuré par la boucle de retour elle-même qui passe par l'intérieur de l'enroulement cylindrique et s'enroule sur un cabestan central coaxial à la cage. L'entraînement de cette bande est donc assuré à la fois par friction et par traction du brin de retour ce qui présente le grave inconvénient de ne pas permettre un entraînement correct. En effet, dans l'enroulement cylindrique principal, la traction de bande depuis l'intérieur se transmet mal puisque cet enroulement est soutenu à l'intérieur par la cage à barreaux tournants, et qu'il ne saurait être question de disposer des barreaux tournants à l'intérieur étant donné que ceux-ci interféreraient alors avec les produits solides centrifugés.

Un progrès important a été réalisé par le brevet français 2 372 658 dans le mode d'entraînement de la bande sans fin, lequel est assuré, toujours par friction, mais par action directe sur la partie cylindrique, ce qui est obtenu en entraînant directement les barreaux en rotation par un mécanisme approprié, l'adhérence étant obtenue tout naturellement par la force centrifuge. Dans ce cas aucune action n'est exercée sur la boucle de retour qui peut alors être une boucle naturelle libre d'un trajet quelconque, par exemple extérieur à la paroi cylindrique. Un autre progrès important et réalisé également par le brevet antérieur susvisé consiste à remplacer la bande plate perforée par une lanière pleine sans perforations et chanfreinée, non colmatable et facile á nettoyer. Cependant, ce dispositif nécessite un réducteur à sorties multiples et les barreaux tournants, de faible diamètre et de grande longueur, sont soumis à une flexion rotative alternée du fait de la force centrifuge ce qui limite la vitesse maximum à laquelle peut tourner le dispositif. D'autre part, des problèmes importants peuvent se poser au point de vue de la dilatation lorsque la lanière est réalisée en un matériau plus dilatable que la cage et que l'appareil fonctionne à chaud, par exemple pour la confection du café. En effet, dans ce cas, l'enroulement à spires jointives totalise une grande longueur de lanière et la dilatation différentielle accumulée de cette lanière par rapport à la cage se répercute exclusivement dans la boucle de retour qui subit ainsi des variations importantes. Celles-ci sont tolérées par le montage libre de cette boucle, comme exposé plus haut, mais conduisent à un encombrement non négligeable de l'ensemble tournant et constitue une cause supplementaire de limitation de la vitesse à chaud.

Le but de l'invention est de réaliser un séparateur centrifuge sans fin qui élimine les inconvénients précédents, c'est-à-dire qui soit mécaniquement plus simple et plus robuste et qui d'autre part ne produise pas l'accumulation des dilations dans la boucle de retour.

Pour cela, la lanière est disposée dans une cage rotative à grande vitesse comportant d'une part un dispositif de support et de guidage de la partie cylindrique à spires jointives, et d'autre part les guidages progressifs de déroulement et d'enroulement situés à poste fixe dans cette cage, comme dans les dispositifs connus, avec également un moyen d'entraînement lent et continu de la lanière par rapport à ce support. Cependant, conformément à l'invention, ledit dispositif de support et de guidage de la partie cylindrique que à spires jointives de la lanière, ainsi que ledit moyen d'entraînement de cette lanière sont constitués à la fois par une deuxième cage cylindrique coaxiale à la première et comportant des barreaux équidistants qui sont solidaires de deux couronnes continues d'extrémité et qui font saillie à l'intérieur de ces couronnes, tandis que la lanière comporte des crantages extérieurs coopérant avec ces barreaux pour assurer un engrènement, ladite deuxième cage étant entraînée à une vitesse légèrement différente de celle de la première. L'une des deux cages peut être solidaire d'un arbre d'entraînement monté sur paliers, tandis que l'autre cage est montée tournante dans la précédente en étant entraînée du lent mouvement différentiel par un réducteur entraîné à partir d'un pignon coaxial immobile ou immobilisable.

Dans le cas où la boucle de retour de la lanière est constituée par une boucle naturelle libre passant. par l'extérieur de l'enroulement hélicoïdal à spires jointives, c'est alors ladite première cage comportant les guidages progressifs de déroulement et d'enroulement qui est solidaire de l'arbre d'entraînement, et la deuxième cage portant les barreaux de soutien et d'engrènement de la lanière est en forme de manchon ouvert au deux bouts, avec du côté dudit arbre une couronne dentée d'entraînement sur laquelle agit un pignon dont la rotation lente est assurée par un réducteur porté par la première cage, ledit manchon étant monté tournant dans la deuxième cage au moyen de deux paliers en forme de couronne comportant chacun une échancrure pour le passage de la boucle de retour, laquelle contourne les deux bords extrêmes dudit manchon et ladite couronne dentée pour passer dans l'intervalle entre les deux cages.

D'autre part, la lanière, comme dans l'exemple précédent, est à section pleine quadrangulaire avec dans la surface de contact avec la spire limitrophe des encoches évasées vers l'extérieur et intercalées avec les crantages d'engrènement.

D'autres particularités de l'invention apparaîtront dans la description qui va suivre d'un mode de réalisation pris comme exemple et représenté sur le dessin annexé, sur lequel:

la fig. 1 est une coupe axiale du dispositif;

la fig. 2 est une vue extérieure avec arraché partiel de la partie tournante de ce dispositif;

la fig. 3 est une vue de dessus de cette partie tournante;

la fig. 4 est une coupe horizontale de la cage d'engrènement;

la fig. 5 est une vue en perspective à grande échelle d'un fragment de la lanière, et

la fig. 6 est une vue en perspective de la pièce de guidage inférieure.

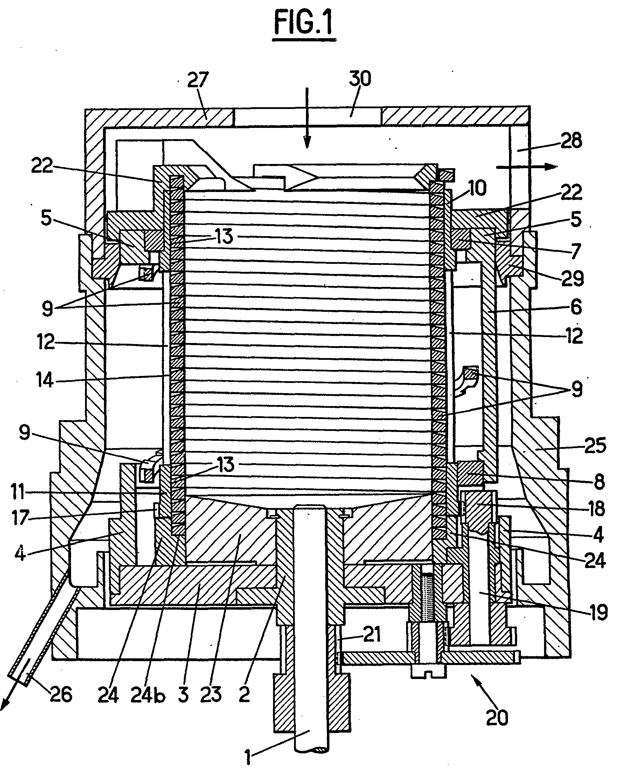

On voit sur la fig. 1 l'arbre d'entraînement 1, porté par des paliers non représentés et entraîné par un moteur non représenté. Cet arbre est de préférence vertical, mais il pourrait également avoir toute autre orientation étant donné que la force centrifuge joue un rôle prédominant alors qu'au contraire la gravité ne joue qu'un rôle tout à fait secondaire. L'extrémité supérieure de cet arbre 1 est solidaire d'un moyeu 2 lui-même solidaire d'un disque 3, lequel porte une paroi cylindrique qui est ajourée de manière à ne laisser subsister qu'une couronne inférieure 4 dont la base est solidaire de la périphérie du disque 3, une couronne supérieure 5 et des parties étroites 6, par exemple au nombre de trois, reliant ces deux couronnes. Toutes les pièces précédentes tournent donc avec l'arbre 1 en un ensemble rigide constituant la première cage.

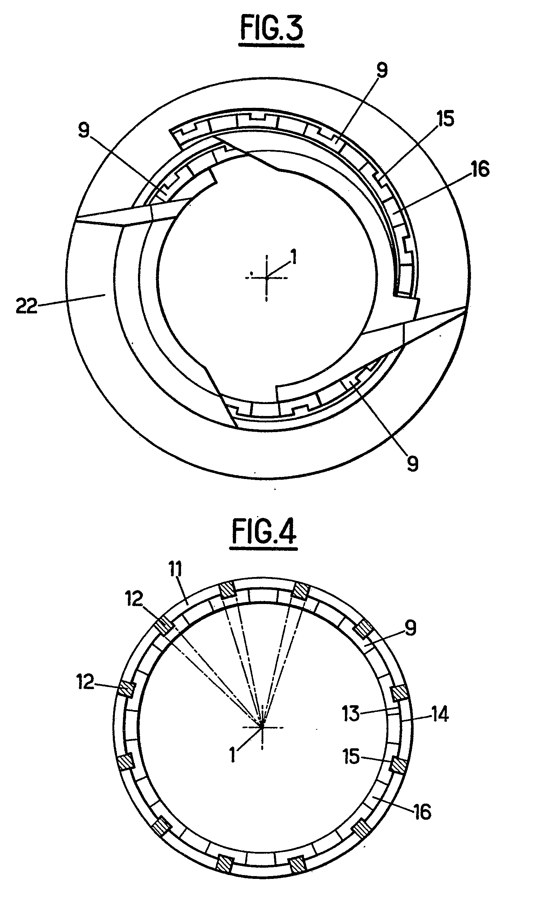

Dans cette cage sont montées une couronne palier supérieure 7 et une couronne palier inférieure 8 en matériau anti-friction et toutes deux ajourées ou échancrées en un endroit approprié de la circonférence pour laisser le passage à la boucle de retour de la lanière sans fin 9. Dans ces couronnes palier 7 et 8 tourillonne la deuxième cage constituée par un autre manchon cylindrique comportant des ouvertures latérales rectangulaires pour ne laisser subsister qu'une couronne continue supérieure 10 et une couronne continue inférieure 11 réunies par des barreaux 12, lesquelles font saillie vers l'intérieur de la surface intérieure cylindrique commune 13 des deux couronnes 10 et 11, comme on le voit en particulier sur la fig. 4.

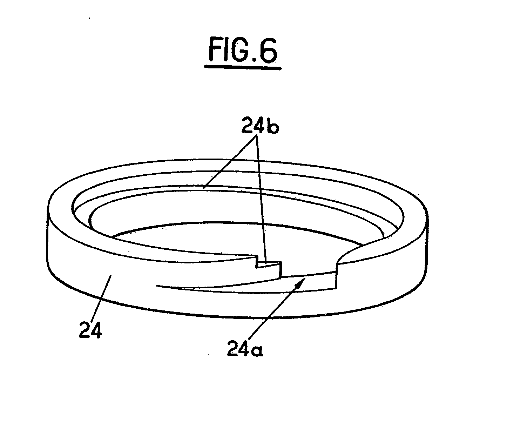

La lanière 9, visible sur toutes les figures et en particulier sur la fig. 5 a une section quadrangulaire, c'est-à-dire rectangulaire ou de préférence carrée, avec sur sa surface périphérique 14 des crantages 15 équidistants destinés à venir engrener avec les saillies des barreaux 12 intérieures au cylindre 13 lorsque la lanière est enroulée sous sa forme hélicoïdale à spires jointives à l'intérieur de la deuxième cage avec sa surface 14 en regard de la surface 13 de la cage. En outre, la lanière comporte sur une de ses faces perpendiculaire à la face 14, par exemple dans sa face supérieure, des échancrures 16 évasées vers l'extérieur pour ménager d'une manière connue des orifices de filtration incolmatables dans l'enroulement hélicoïdal précédent, ces échancrures 16 étant conformément à l'invention intercalées avec les crantages 15.

Le profil de la partie des barreaux 12 faisant saillie à l'intérieur de la surface 13, et par conséqent le profil des crantages 15, peuvent être n'importe quel profil d'engrenage, mais de préférence des profils trapézoïdaux dont les faces latérales planes convergent vers l'axe de l'ensemble. De cette manière, lorsque la température varie, par exemple pour l'application à une machine à café, et lorsque la lanière a un coefficient de dilatation très différent de celui de la cage, comme c'est généralement le cas lorsque la lanière est en matière plastique et la cage en métal, les dilatations et contractions de l'ensemble de l'enroulement hélicoïdal contenu dans la cage d'entraînement entraînent une déformation par homothétie de cet enroulement qui fait glisser les lanières sur les barreaux par les faces latérales planes convergentes tout en continuant à assurer un centrage rigoureux de l'ensemble de la lanière, a condition toutefois que la cage soit dimensionnée pour la température maximum permise à la lanière, ou ce qui revient au même à condition de ménager à froid un jeu suffisant entre les surfaces 13 et 14 d'une part, et entre le sommet des saillies que constitue les barreaux 12 et le fond des crantages 15 d'autre part. Grâce à cette disposition la boucle de retour de la lanière ne se dilate que pour son propre compte sans avoir à subir les dilatations accumulées des nombreuses spires de l'enroulement à spires jointives intérieur à la cage d'entraînement.

Pour assurer l'entraînement en rotation lente de la cage d'entraînement 10—11—12 par rapport à la cage support 1 à 8 on dispose à la base de la couronne 11 une denture d'engrenage extérieure 17 sur laquelle vient engrener un pignon 18 dont l'axe 19 tourillonne dans le disque 3 dans un palier approprié en étant entraîné en rotation lente, par un réducteur 20 approprié disposé sous le disque 3, à partir d'un pignon central 21 coaxial à l'arbre 1 et pouvant être soit fixe, soit immobilisable sur commande, ce qui permet d'une manière connue en libérant ce pignon 21 de stopper le mouvement de progression axial de la lanière sans fin sans pour autant arrêter le mouvement de rotation de l'ensemble.

Comme exposé plus haut, la première cage est celle qui comporte à poste fixe les guidages progressifs de déroulement et d'enroulement de la lanière. A cet effet, l'extrémité supérieure de la couronne 5 de la première cage comporte une pièce 22, qui peut avantageusement être réalisée en matière moulée, et qui possède, comme on le voit en particulier sur les fig. 1 et 3, un profilage particulier lui permettant de s'emboîter sur la spire supérieure de l'enroulement à spires jointives de la lanière et de la guider progressivement vers l'extérieur pour lui faire franchir le bord supérieur de la couronne 10, après quoi cette lanière s'infléchit progressivement vers le bas pour passer à travers une échancrure spiraloïde pratiquée dans cette pièce 22 puis dans l'échancrure indiquée plus haut de la pièce 7 et éventuellement une échancrure de la couronne 5, alimentant ainsi en continu la boucle de retour libre de la lanière 9 qui s'étend, en une ou plusieurs spires, jusqu'à l'extrémité inférieure du dispositif en passant par l'extérieur de la cage d'entraînement. Cette même pièce 22 profilée peut également avantageusement comporter des dispositifs de raclage de la lanière ainsi que des encoches et déflecteurs de guidage des produits solides qui sont chassés vers l'extérieur par la force centrifuge.

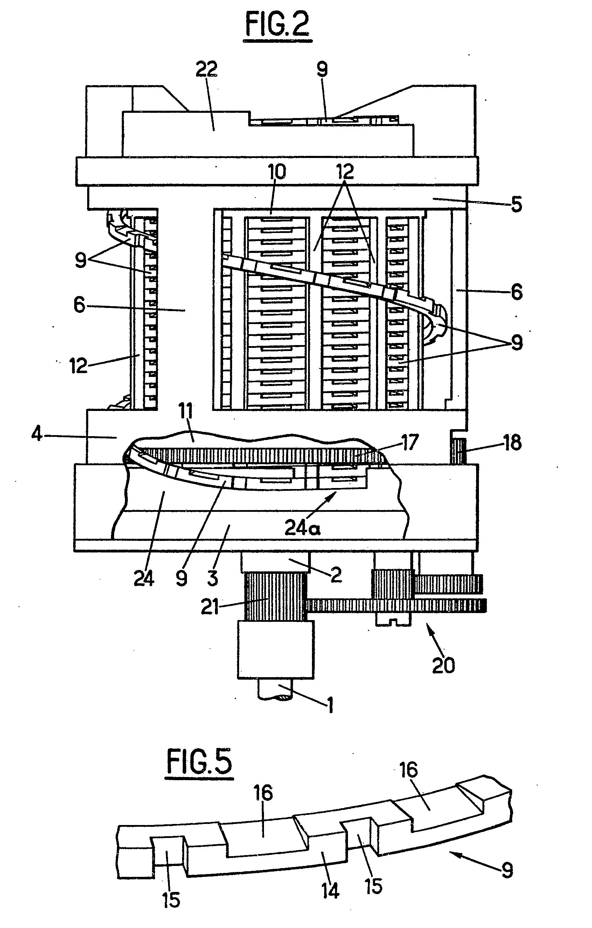

Du côté inférieur il est prévu de préférence une paroi de fond rotative 23 de forme cylindrique qui tourillonne folle autour d'un prolongement de l'arbre 1 ou du moyeu 2 au-dessus du disque 3 et dont la surface cylindrique extérieure correspond exactement au diamètre minimum intérieur d'enroulement de la lanière 9. Il est en outre prévu une autre pièce profilée 24, qui elle est fixée au-dessus du disque 3, et qui peut egalement être réalisée en matière moulée. Cette pièce comporte un profilage, visible en particulier sur l'arraché de la fig. 2 et sur la fig. 6, permettant de guider le brin inférieur de la lanière pour que celle-ci, après avoir contourné la couronne dentée 17 et le bord inférieur de la couronne 11 de la cage d'entraînement, se rapproche en spirale vers le centre jusqu'à s'enrouler à spires jointives sur la surface cylindrique du fond rotatif 23, juste au-dessous de la spire précédente, en passant par le dégagement 24a.

Cet enroulement progressif et continu d'une nouvelle spire à chaque tour au-dessous des spires existantes, dont la base glisse en appui constant sur la rampe hélicoïdale 24b, produit un lent mouvement d'ascension vertical de l'ensemble des spires par rapport au fond rotatif 23 d'une part et également par rapport à la cage d'entraînement, l'extrémité inférieure des barreaux 12 étant de préférence profilée en forme de bateau pour assurer leur recentrage automatique sur les crantages 15 pendant que la lanière progresse entre les parties 23 et 11 et avant qu'elle ne quitte le pièce 23.

Ce mouvement de la lanière se fait donc sans aucun frottement horizontal de celle-ci, ni sur le fond 23 qui on le rappelle est fou, ni sur la cage d'entraînement, mais seulement un lent glissement vertical entre les faces latérales des barreaux et les faces latérales des crantages 15. Le seul glissement horizontal qui ait lieu intervient dans les pièces de guidage profilées 22 et 24.

Outre les questions de dilatation exposées plus haut, il est clair que ce mode de support, de guidage et d'entraînement à l'aide d'une unique pièce motrice présente un avantage considérable par rapport à l'entraînement exposé plus haut par mise en rotation des rouleaux périphériques. En effet, dans ce cas non seulement le mécanisme d'engrenages se trouve fortement simplifié, mais surtout les divers barreaux 12, qui n'ont plus besoin de palier individuel, peuvent être beaucoup plus nombreux sans grever le coût de l'appareillage, et ils peuvent être extrêmement rigides sans avoir à subir de flexion rotative alternée. Ainsi non seulement le mécanisme est beaucoup plus simple à fabriquer, mais il est également beaucoup plus robuste et beaucoup plus rigide, puisque réalisé en un seul bloc, et également beaucoup mieux centré ce qui lui permet de tourner sans vibration et sans détérioration à des vitesses de centrifugation beaucoup plus élevées.

Naturellement, l'ensemble est disposé dans un carter fixe, dont une base 25 recueillant la partie liquide centrifugée qui est évacuée en 26, et une partie supérieure 27 avec un orifice 28 d'évacuation des produits solides, un joint 29 étant disposé entre les deux pour porter sur la partie supérieure de la couronne 5, tandis qu'un orifice supérieur 30 sert à l'introduction des produits.

Les applications de ce séparateur sont innombrables puisque l'appareil peut servir au criblage ou au tamisage d'un ou de plusieurs produits pulvérulents à sec, ou encore au filtrage et à la séparation centrifuge d'un liquide contenant des particules solides, comme par exemple les filtres centrifuges intéressant l'industrie sucrière ou les centrifugeuses à jus de fruits. Il permet également d'assurer le lavage ou le rinçage de produits solides par un solvant introduit séparément dans l'appareil ou encore l'extraction d'un principe actif ou d'un arôme contenu dans les produits solides à partir également d'un solvant liquide. Dans cette catégorie entre en particulier l'application aux machines à café à fonctionnement continu et à nettoyage automatique telles que celles déjà envisagées dans le brevet français susvisé.

Dans la diversité de ces applications on rappelle que l'axe de rotation du dispositif peut indifféremment être vertical ou selon toute autre orientation, que la vitesse de rotation peut être variée à volonté selon le résultat désiré et que le mouvement de progression axial de la lanière sans fin peut être à volonté établi ou interrompu sans pour autant interrompre la rotation d'ensemble.

**Revendications**

1. Séparateur à paroi cylindrique tournante à

renouvellement continu du type comportant un enroulement hélicoïdal à spires jointives d'une lanière (9) sans fin bouclée sur elle-même pour se dérouler lentement à une extrémité et se réenrouler à l'autre extrémité en progressant axialement en même temps qu'elle est entraînée en rotation continue à plus grande vitesse, la lanière (9) étant disposée à cet effet dans une cage (1—6) rotative tournant à cette grande vitesse et comportant d'une part un dispositif de support et de guidage de la partie cylindrique à spires jointives et d'autre part les guidages (22, 24) progressifs de déroulement et d'enroulement situés à poste fixe dans cette cage (1—6), avec un moyen d'entraînement lent et continu de la lanière par rapport à cette cage, caractérisé par le fait que ledit dispositif de support et de guidage, ainsi que ledit moyen d'entraînement sont constitués à la fois par une deuxieme cage (10, 11, 12) cylindrique coaxiale à la première (1—6) et comportant des barreaux équidistants (12) qui sont solidaires de deux couronnes continues d'extrémité (10, 11) et qui font saillie à l'intérieur de ces couronnes, tandis que la lanière (9) comporte des crantages extérieures (15) coopérant avec la partie en saillie de ces barreaux (12) pour assurer un engrènement, ladite deuxième cage (10, 11, 12) étant entraînée à une vitesse légèrement différente de celle de la première (1—6).

2. Séparateur selon la revendication 1, caractérisé par le fait que la première cage comportant les guides progressifs de déroulement et d'enroulement est solidaire d'un arbre de rotation (1) par l'intermédiaire d'un disque (3) fermant celles de ses extrémités par où commence le filtrage, tandis que la deuxième cage est en forme de manchon ouvert aux deux bouts et tourillonnant dans la première au moyen de bagues de palier échancrées, cette deuxième cage (10, 11, 12) comportant à son extrémité proche dudit disque (3) une denture d'engrenage extérieure (17) sur laquelle engrène un pignon (18) dont l'axe (19) tourillonne dans ledit disque (3) en étant entraîné à partir d'un pignon planétaire (21) immobile ou immobilisable au moyen d'un réducteur (20) solidaire dudit disque (3).

3. Séparateur selon la revendication 2, caractérisé par le fait qu'il comporte en outre au-dessus dudit disque (3) fermant la première cage (1—6) un fond circulaire (23) sur la périphérie circulaire duquel vient s'enrouler à spires jointives la lanière (9) guidée par le guide d'enroulement (24), avant que cette lanière ne vienne s'emboîter axialement sur lesdits barreaux (12), les guidages progressifs de déroulement et d'enroulement portés par la première cage étant profilés pour déformer progressivement la lanière (9) afin de faire passer celle-ci à l'extérieur de la cage d'entraînement (10, 11, 12) et dans l'intervalle entre les deux cages.

4. Séparateur selon la revendication précédente, caractérisé par le fait que la lanière (9) est à section quadrangulaire avec trois faces lisses et une surface de contact avec la spire limitrophe comportant des encoches évasées (16) vers l'extérieur et intercalées avec lesdits crantages (15).

## Patentansprüche

1. Abscheider mit sich ständig erneuernder drehender zylindrischer Wand, bestehend aus einer schraubenförmiger Wicklung eines endlosen Riemens (9) mit aneinanderliegenden Windungen, der in einer in sich geschlossenen Schleife verläuft und sich an einem Ende langsam abwickelt und am anderen Ende wieder aufwickelt, wobei er axial fortschreitet während er mit größerer Geschwindigkeit ständig rotierend angetrieben wird, wobei der Riemen (9) zu diesem Zweck in einem Drehkäfig (1—6) angeordnet ist, der sich mit dieser größeren Geschwindkigkeit dreht und einerseits eine Halte- und Leitvorrichtung für den zylindrischen Teil mit nebeneinanderliegenden Wicklungen der Riemens und andererseits die fortschreitenden Abwickel- und Aufwickelführungen (22, 24) in diesem Käfig (1—6) stationär enthält, und mit einem Mittel zum langsamen und ständigen Antrieb des Reimens gegenüber diesem Käfig, dadurch gekennzeichnet, daß diese Halte- und Leitvorrichtungen sowie dieses Antriebsmittel gleichzeitig aus einem zweiten zylindrischen mit dem ersten Käfig (1—6) koaxialen Käfig (10, 11, 12) bestehen, der abstandsgleiche Stäbe (12) umfaßt, die mit zwei kontinuierlichen Endkronen (10, 11) fest verbunden sind und nach innen über diese Kronen vorstehen, während der Riemen (9) eine Außenverzahnung (15) besitzt, die mit dem vorstehenden Teil dieser Stäbe (12) in Eingriff steht, wobei dieser zweite Käfig (10, 11, 12) mit einer von der des ersten Käfig (1—6) etwas abweichenden Geschwindkigkeit angetrieben wird.

2. Abscheider gemäß Anspruch 1, dadurch gekennzeichnet, daß der erste Käfig mit den fortschreitenden Abwickel- und Aufwickelführungen mittels einer Scheibe (3) fest mit einer Drehwelle (1) verbunden ist, wobei diese Scheibe das Ende des Käfigs abschließt, an dem die Filterung beginnt, während der zweite Käfig die Form einer an beiden Enden offenen Hülse hat und in dem ersten Käfig mittels mit Ausschnitten versehenen Lagerringen gelagert ist, wobei dieser zweite Käfig (10, 11, 12) an dem der Scheibe (3) zugewandten Ende eine Außenverzahnung (17) besitzt, in die ein Ritzel (18) eingreift, dessen Welle (19) in dieser Scheibe (3) gelagert ist und von einem feststehenden oder feststellbaren Sonnenrad (21) über eine auf der Scheibe (3) sitzenden Untersetzung (20) angetrieben wird.

3. Abscheider gemäß Anspruch 2, dadurch gekennzeichnet, daß er ferner über der Scheibe (3), die den ersten Käfig (1—6) abschließt, einen kreisförmigen Boden (23) enthält, auf dessen kreisförmigem Umfang sich der Riemen (9) geführt von der Aufwickelführung (24) in nebeneinanderliegenden Windungen aufwickelt bevor sich der Riemen (9) axial über die Stäbe (12) schiebt, wobei die vom ersten Käfig (1, 6) getragenen fortschreitenden Abwickel- und Aufwickelführüngen so ausgebildet sind, daß sie den Riemen (9) fortschreitend verformen, um ihn außerhalb des Antriebskäfigs (10, 11, 12) in den Zwischenraum zwischen den beiden Käfigen zu führen.

4. Abscheider gemäß dem vorstehenden Anspruch, dadurch gekennzeichnet, daß der· Riemen (9) mit viereckigem Querschnitt drei glatte Flächen und eine Berührungsfläche mit der benachbarten Windung hat, die abwechselnd mit der genannten Außenzahnung (15) sich nach aussen aufweitenden Kerbe (1, 6) aufweist.

**Claims**

1. A separator comprising a continuously renewed cylindrical rotating wall formed from a helical winding with close turns of an endless belt (9) looped with itself in order to unwind slowly at one end and rewind at the other end while progressing axially and at the same time being rotated at a higher speed, the belt (9) being placed to this end in a cage (1—6) rotating at this high speed and including, on the one hand, a device for supporting and guiding the cylindrical part with close turns and, on the other hand, gradually unwinding and rewinding guides (22, 24) located in fixed positions in this cage (1—6), and a means for driving the belt slowly and continuously relatively to this cage, characterized by the fact that the said supporting and guiding device as well as the said driving means are both composed of a second cylindrical cage (10, 11, 12) coaxial with the first one (1—6) and comprising equally spaced bars (12) which are integral with two continuous end crowns (10, 11) and which protrude inside these crowns, whereas the belt (9) is provided with external notches (15) meshing with the protruding part of these bars (12), the said second cage (10, 11, 12) being driven at a speed slightly different from that of the first one (1—6).

2. The separator according to claim 1, characterized by the fact that the first cage comprising the gradually unwinding and rewinding guides is rigidly locked with a rotating shaft (1) through a disc (3) closing those of its ends at which the percolation starts, whereas the second cage is in the shape of a sleeve opened at both ends and journaled in the first cage one by means of notched bearing rings, the end of this second cage (10, 11, 12) adjacent to the said disc (3) having an external gear toothing (17) with which meshes a pinion (18) the axle (19) of which is journaled in the said disc (3) while being driven by means of a reduction gear (20) mounted on the said disc (3) from a planetary pinion (21) which is immovable or can be made immovable.

3. The separator according to claim 2, characterized by the fact that it further comprises, above the said disc (3) closing the first cage (1—6), a circular bottom (23) on the circular periphery of which winds with close turns the belt (9) guided by the rewinding guide (24), before this belt fits axially on the said bars (12), the gradually unwinding and rewinding guides carried by the first cage being shaped to gradually deform the belt (9) in order to pass the latter outside the driving cage (10, 11, 12) and through the gap between the two cages.

4. Separator according to the preceding claim, characterized by the fact that the belt (9) is of quadrangular cross-section with three smooth faces and a surface in contact with the adjacent turn provided with slots (16) widened towards the outside and intercalated with the said notches (15).

0 006 240

# FIG.1

## FIG.2

## FIG.5

## FIG.3

## FIG.4

# FIG.6

24b

24

24a